# EUROPÄISCHE PATENTANMELDUNG

(11) **EP 4 755 710 A1**
(43) Veröffentlichungstag der Anmeldung: **10.06.2026**
(21) Anmeldenummer: 24218289.7
(22) Anmeldetag: 09.12.2024
(51) Int. Cl.: B60N 2/70

(54) **FAHRZEUGSITZ, INSBESONDERE SPORTWAGENSITZ**

(71) Anmelder: iControl automotive GmbH, 82024 Taufkirchen (DE)
(72) Erfinder: Hild, Tobias, 82031 Grünwald (DE); Staudenmayer, Matthias, 83512 Wasserburg am Inn (DE)
(74) Vertreter: Koelle, Alexander

(57) **Zusammenfassung**

Die vorliegende Erfindung betrifft einen Fahrzeugsitz (1), insbesondere Sportwagensitz, umfassend eine Sitzschale (2), umfassend eine Rückenlehne (2-1) für den Rücken eines Fahrers, ein Schalensitzteil (2-2) für das Becken und die Oberschenkel des Fahrers, und Seitenwangen (2-3, 2-4) für Becken, Oberschenkel, Taille, Rücken und Schultern des Fahrers, und zumindest eine mehrteilige Polsterung (6), wobei die mehrteilige Polsterung (6) ein mehrteiliges Polstersitzteil (6-1) und ein mehrteiliges Polsterrückenteil (6-2) umfasst, wobei das mehrteilige Polstersitzteil (6-1) ein erstes Polstersitzunterteil (6-1a) für das Gesäß des Fahrers und ein zweites Polstersitzunterteil (6-1b) für die Auflage der Oberschenkel des Fahrers umfasst, wobei das mehrteilige Polsterrückenteil (6-2) zumindest ein erstes Polsterrückenunterteil (6-2a) für den Bereich der Lendenwirbel und/oder Taille des Fahrers und zumindest ein zweites Polsterrückenunterteil (6-2b) für den Oberkörper des Fahrers umfasst, und wobei die Teile (6-1, 6-2) der Polsterung (6) mittels Strukturverbindungsmittel (12) lösbar miteinander und/oder lösbar mit der Sitzschale (2) verbunden sind, so dass die Polsterung (6) in einem Stück an der Sitzschale (2) befestigt ist.

## Beschreibung

### Technisches Gebiet

Die vorliegende Erfindung betrifft einen Fahrzeugsitz, insbesondere Sportwagensitz, mit einer Sitzschale und einer mehrteiligen Polsterung, wobei die Teile der Polsterung mittels Strukturverbindungsmittel lösbar miteinander und/oder lösbar mit der Sitzschale verbunden sind.

Die vorliegende Erfindung betrifft ferner eine mehrteilige Polsterung für einen Fahrzeugsitz, insbesondere Sportwagensitz.

### Stand der Technik

Fahrzeugsitze weisen eine harte Sitzschale auf, welche die notwendige Stabilität des Fahrzeugsitzes bereitstellt, wobei auf der harten Sitzschale eine aus einem weichen Material bestehende Polsterung aufgebracht, auf welcher der Fahrer sitzt, und welche eine bequeme Sitzposition des Fahrers während der Fahrt mit dem Fahrzeug ermöglicht.

Im Motorrennsport werden hier spezielle, als Sportwagensitze ausgebildete Fahrzeugsitze in den Rennwagen verwendet, auf welchen der Rennfahrer sitzt. Im Motorrennsport, insbesondere bei langdauernden Fahrzeugrennen, wirken auf den in einem Sportwagensitz sitzenden Rennfahrer nicht nur immense Verzögerungswerte beim Bremsen, sondern treten bei Kurvenfahrten mit hohen Geschwindigkeiten sehr hohe Querbeschleunigungen auf, welche teilweise Werte von mehr als der vierfachen bis zur sechs-fachen Erdbeschleunigung, also 4g bis 6g, erreichen können. Aus diesem Grund ist es im Motorsport, insbesondere bei langdauernden Fahrzeugrennen, entscheidend, dass die in dem Sportwagensitz verwendete Polsterung perfekt an die individuelle Körperanatomie des jeweiligen Rennfahrers angepasst ist, um eine optimale Sitzergonomie zu erreichen, da bereits kleineste Abweichungen der optimalen Sitzergonomie zu Druckstellen bei den Rennfahrern führen können, welche unter Umständen in Schmerzen und Muskelkrämpfen resultieren, welche die Rennperformance des Rennfahrers signifikant beeinträchtigen können.

Aus diesem Grund gibt es im Motorsport, insbesondere bei langdauernden Fahrzeugrennen, für jeden einzelnen Rennfahrers eine individuell auf den jeweiligen Rennfahrer angepasste Sitzpolsterung, welche nicht zwischen unterschiedlichen Rennfahrern getauscht wird.

Im Motorrennsport werden aus diesem Grund unter anderem die speziellen, als Sportwagensitze ausgebildeten Fahrzeugsitze in den Rennwägen mit Polsterteilen oder sog. Pads ausgestattet, die jeweils lösbar in bzw. an der Sattelschale befestigt werden, z.B. mittels Klett- oder Schnappverschlüssen. Teilweise sind für eine ausreichend wirksame Befestigung jedoch eine Vielzahl an Klett- oder Schnappverschlüssen erforderlich. Diese Befestigungen halten mehr oder weniger gut. Teilweise werden beim Entfernen jedoch die Polsterteile oder Pads direkt beschädigt bzw. reißen ein, was natürlich unerwünscht ist und die Auswechselbarkeit stark einschränkt.

Ein hierbei auftretendes Problem bei langdauernden Fahrzeugrennen ist, dass oftmals Fahrerwechsel notwendig sind, welche natürlich aufgrund des Charakters des Rennens zeitlich möglich schnell durchgeführt werden müssen, und keine Zeit für einen aufwendigen Umbau des Sportwagensitzes dahingehend vorhanden ist, dass ein umfassende Tausch der jeweiligen individuellen Polsterung und/oder der Polsterteile bzw. Pads durchgeführt werden kann.

Aus diesem Grund weisen herkömmliche im Motorsport, insbesondere bei langdauernden Fahrzeugrennen, verwendete Sportwagensitze lediglich eine harte universelle Sitzschale auf, welche von allen Rennfahrern verwendet werden kann, jedoch keine fest mit der Sitzschale verbundene Polsterung auf, da die Polsterung für jeden einzelnen Rennfahrer individuell angepasst ist, und entsprechend bei einem Fahrerwechsel getauscht werden muss.

Die Druckschrift DE 197 11 944 A1 offenbart einen Fahrzeugsitz mit einem Trägerteil, einer im Crashfall bewegbaren Rückenlehne und einem Sitzteil.

Die Druckschrift DE 10 2005 044 012 B4 offenbart einen Fahrzeugsitz, insbesondere Sportsitz, mit einem Sitzteil und einer Lehne, die relativ zum Sitzteil schwenkbar ist, und mit einem Seitenairbag-Modul.

### Offenlegung der Erfindung

Die vorliegende Erfindung stellt sich zur Aufgabe, einen Fahrzeugsitz, insbesondere Sportwagensitz, und eine Polsterung für einen Fahrzeugsitz, insbesondere Sportwagensitz bereitzustellen, bei welchem, bzw. bei welcher die Zeitdauer für einen Wechsel der Polsterung bei einem Fahrerwechsel im Motorsport, insbesondere bei langdauernden Fahrzeugrennen, signifikant reduziert werden kann.

Die Aufgabe der Erfindung wird durch einen Fahrzeugsitz nach Anspruch 1 und durch die zumindest eine mehrteilige Polsterung nach Anspruch 16 gelöst. Die abhängigen Ansprüche beanspruchen bevorzugte Ausführungsformen der Erfindung.

Gemäß einem ersten Aspekt der vorliegenden Erfindung wir die Aufgabe gelöst durch einen Fahrzeugsitz, insbesondere Sportwagensitz, umfassend eine Sitzschale, diese umfassend eine Rückenlehne für den Rücken eines Fahrers, ein Schalensitzteil für das Becken und die Oberschenkel des Fahrers, und Seitenwangen für Becken, Oberschenkel, Taille, Rücken und Schultern des Fahrers, und zumindest eine mehrteiligen Polsterung, wobei die mehrteilige Polsterung ein mehrteiliges Polstersitzteil und ein mehrteiliges Polsterrückenteil umfasst, wobei das mehrteilige Polstersitzteil ein erstes Polstersitzunterteil für das Gesäß des Fahrers und ein zweites Polstersitzunterteil für die Auflage der Oberschenkel des Fahrers umfasst, wobei das mehrteilige Polsterrückenteil zumindest ein erstes Polsterrückenunterteil für den Bereich der Lendenwirbel und/oder Taille des Fahrers und zumindest ein zweites Polsterrückenunterteil für den Oberkörper des Fahrers umfasst, und wobei die Teile der Polsterung mittels Strukturverbindungsmittel lösbar miteinander und/oder lösbar mit der Sitzschale verbunden sind, so dass die Polsterung in einem Stück an der Sitzschale befestigt ist.

Dadurch, dass die Teile der Polsterung mittels der Strukturverbindungsmittel lösbar miteinander verbunden werden, können die Teile der Polsterung zu einer einstückigen Polsterung verbunden werden, welche dem Fahrer vor einem Fahrerwechsel bei einem Fahrzeugrennen angelegt werden kann, so dass sich der Fahrer beim Fahrerwechsel mit der angelegten einstückigen Polsterung direkt in die Sitzschale des Fahrzeugsitzes, insbesondere Sportwagensitzes, hineinsetzen kann, ohne dass eine zeitaufwendige Anpassung der Polsterung notwendig ist. Dies reduziert die Zeit bei einem Fahrerwechsel im Motorrennsport, insbesondere bei langen Fahrzeugrennen, wie z.B. einem 24 Stunden Rennen, z.B. in Le Mans, signifikant.

Somit kann die Sitzschale des Fahrzeugsitzes, insbesondere des Sportwagensitzes, universell für viele verschiedene Fahrer bei einem entsprechenden langen Motorrennen genutzt werden, und die einzelnen Rennfahrer können ihre individuellen Polsterungen schon vor dem jeweiligen Fahrerwechsel anlegen, was die Zeitdauer des entsprechenden Fahrerwechsels signifikant reduziert.

Zudem ermöglicht die lösbare Verbindung zwischen den Teilen der Polsterung durch die Strukturverbindungsmittel ein wirksames Ablegen der Polsterung, bzw. einen einfachen Austausch von beschädigten und/oder verschmutzten Teilen der Polsterung, ohne dass die gesamte Polsterung ausgetauscht werden muss.

Gemäß einer Ausführungsform ist die Sitzschale als eine einteilige Sitzschale oder als eine mehrteilige Sitzschale ausgebildet.

Dadurch wird der technische Vorteil erreicht, dass unterschiedliche Herstellungsmöglichkeiten zum Bereitstellen der Sitzschale zur Verfügung stehen. Eine mehrteilige Sitzschale des Fahrzeugsitzes besteht aus mehreren miteinander verbundenen Einzelteilen, welche im Rahmen eines Austauschs modular ausgewechselt werden können. Eine einstückige Sitzschale des Fahrzeugsitzes besteht aus einem einzigen Bauteil und weist eine besonders hohe strukturelle Stabilität und Steifigkeit auf.

Insbesondere ist die Sitzschale als eine starre Sitzschale ausgebildet, wobei hierbei die Rücklehne der Sitzschale gegenüber dem Schalensitzteil nicht verlagerbar bzw. verstellbar ist. Alternativ ist insbesondere die Sitzschale als eine verlagerbare Sitzschale ausgebildet, wobei hierbei die Rücklehne der Sitzschale gegenüber dem Schalensitzteil verlagerbar bzw. verstellbar ist.

Gemäß einer Ausführungsform sind die Seitenwangen an einander gegenüberliegenden Seiten der Sitzschale angeordnet und begrenzen das Schalensitzteil und die Rückenlehne seitlich, wobei die Seitenwangen insbesondere symmetrisch zueinander geformt sind.

Dadurch wird der technische Vorteil erreicht, dass die gegenüberliegenden Seitenwangen der Sitzschale eine wirksame Abstützung der einstückigen Polsterung ermöglichen, wenn sich der Fahrer mit der angelegten einstückigen Polsterung in die Sitzschale setzt. Somit kann die Polsterung durch die Seitenwangen wirksam innerhalb der Sitzschale gehalten werden.

Gemäß einer Ausführungsform weisen die Seitenwangen jeweils einen unteren Seitenwangenbereich auf, welcher das Schalensitzteil seitlich begrenzt, und weisen die Seitenwangen jeweils einen oberen Seitenwangenbereich auf, welcher die Rückenlehne seitlich begrenzt.

Dadurch wird der technische Vorteil erreicht, dass der untere Seitenwagenbereich die durch den Fahrer angelegte Polsterung im Bereich der Oberschenkel und der Hüfte des Fahrers stabilisiert, und dass der obere Seitenwangenbereich die durch den Fahrer angelegte Polsterung im Bereich der Lenden und des Oberkörpers des Fahrers stabilisiert.

Gemäß einer Ausführungsform umfasst die Rückenlehne einen Kopfstützbereich zum Stützen des Kopfes des Fahrers und einen Rückenstützbereich zum Stützen des Rückens des Fahrers,

Dadurch wird der technische Vorteil erreicht, dass die entsprechenden Bereiche eine wirksame Stabilisierung von Kopf und Rücken des Fahrers ermöglichen und dadurch Verletzungsgefahren für den Fahrer während der Fahrt minimieren.

Gemäß einer Ausführungsform ist in den Seitenwangen, insbesondere in dem unteren Seitenwangenbereich, jeweils zumindest eine untere Gurtöffnung zum Durchführen eines Beckengurtes des Fahrers geformt, und/oder ist in der Rückenlehne, insbesondere zwischen dem Kopfstützbereich und dem Rückenstützbereich, zumindest eine obere Gurtöffnung zum Durchführen eines Schultergurtes des Fahrers geformt, und/oder ist in der Rückenlehne, insbesondere in dem Rückenstützbereich, zumindest eine mittlere Öffnung geformt, die der besseren Belüftung bzw. der Luftzu- und -abfuhr dient.

Dadurch wird der technische Vorteil erreicht, dass durch die entsprechende untere und obere Gurtöffnung die Sicherheitsgurte zu dem Fahrer geführt werden können, um den Fahrer während der Fahrt, bzw. während des Fahrzeugrennens wirksam zu sichern.

Gemäß einer Ausführungsform weist das erste Polstersitzunterteil einen ersten Polstersitzbereich für das Becken des Fahrers auf, weist das zweite Polstersitzunterteil einen zweiten Polstersitzbereich für die Oberschenkel des Fahrers auf, weist das erste Polsterrückenunterteil einen ersten Polsterrückenbereich für den Bereich der Lendenwirbel und/oder Taille des Fahrers auf, und/oder weist das zweite Polsterrückenunterteil einen zweiten Polsterrückenbereich für den Oberkörper des Fahrers auf.

Dadurch wird der technische Vorteil erreicht, dass die Polstersitzunterteile und die Polsterrückenteile eine wirksame Polsterung von allen relevanten Körperteilen des Fahrers ermöglichen, welche mit der Sitzschalte des Körpers des Rennfahrers in Kontakt stehen.

Das Polstersitzteil und/oder das Polsterrückenteil können auch einstückig ausgestaltet sein.

Gemäß einer Ausführungsform weist das erste Polstersitzunterteil jeweils erste untere Polsterseitenwangen auf, weist das zweite Polstersitzunterteil jeweils zweite untere Polsterseitenwangen auf, weist das erste Polsterrückenunterteil jeweils erste obere Polsterseitenwangen auf, und/oder weist das zweite Polsterrückenunterteil jeweils zweite obere Polsterseitenwangen auf.

Dadurch wird der technische Vorteil erreicht, dass durch die Polsterseitenwangen eine wirksame seitliche Fixierung der Körperteile des Rennfahrers innerhalb der mehrteiligen Polsterung erreicht wird.

Insbesondere liegen die ersten unteren Polsterseitenwangen und die zweiten unteren Polsterseitenwangen an dem unteren Seitenwagenbereich der Seitenwangen der Sitzschale an.

Insbesondere liegen die ersten oberen Polsterseitenwangen und die zweiten oberen Polsterseitenwangen an dem oberen Seitenwagenbereich der Seitenwangen der Sitzschale an.

Gemäß einer Ausführungsform ist in dem ersten Polstersitzunterteil, insbesondere in den ersten unteren Polsterseitenwangen, jeweils zumindest eine untere, weitere Gurtöffnung zum Durchführen eines Beckengurtes des Fahrers geformt, und/oder ist in dem zweiten Polsterrückenunterteil, insbesondere zwischen dem Kopfstützbereich und dem zweiten Polsterrückenbereich, zumindest eine obere, weitere Gurtöffnung zum Durchführen eines Schultergurtes des Fahrers geformt, und/oder ist in dem ersten Polsterrückenunterteil, insbesondere in dem ersten Polsterrückenbereich, zumindest eine mittlere, weitere Öffnung geformt, die der besseren Belüftung bzw. der Luftzu- und -abfuhr dient.

Dadurch wird der technische Vorteil erreicht, dass durch die entsprechenden Gurtöffnungen die Sicherheitsgurte zu dem Fahrer geführt werden können, um den Fahrer während der Fahrt, bzw. während des Fahrzeugrennens wirksam zu sichern.

Insbesondere ist die in dem zweiten Polsterrückenunterteil, insbesondere zwischen dem Kopfstützbereich und dem zweiten Polsterrückenbereich, geformte zumindest eine obere, weitere Gurtöffnung fluchtend zu der in der Rückenlehne, insbesondere zwischen dem Kopfstützbereich und dem Rückenstützbereich, zumindest geformten oberen Gurtöffnung angeordnet, so dass der Schultergurt des Fahrers durch die obere Gurtöffnung und durch die untere, weitere Gurtöffnung geführt werden kann.

Insbesondere ist die in dem ersten Polstersitzunterteil, insbesondere in den ersten unteren Polsterseitenwangen, geformte zumindest eine untere, weitere Gurtöffnung fluchtend zu der in den Seitenwangen, insbesondere in dem unteren Seitenwangenbereich, der Sitzschale geformten unteren Gurtöffnung angeordnet, so dass der Beckengurt des Fahrers durch die untere Gurtöffnung und durch die untere, weitere Gurtöffnung geführt werden kann.

Gemäß einer Ausführungsform umfassen die Strukturverbindungsmittel ein erstes Strukturverbindungsmittel, welches ausgebildet ist, das erste Polstersitzunterteil mit dem zweiten Polstersitzunterteil lösbar zu verbinden, umfassen die Strukturverbindungsmittel ein zweites Strukturverbindungsmittel, welches ausgebildet ist, das zweite Polstersitzunterteil mit dem ersten Polsterrückenunterteil lösbar zu verbinden, und umfassen die Strukturverbindungsmittel ein drittes Strukturverbindungsmittel, welches ausgebildet ist, das erstes Polsterrückenunterteil mit dem zweiten Polsterrückenunterteil lösbar zu verbinden.

Dadurch wird der technische Vorteil erreicht, dass durch die drei Strukturverbindungsmittel eine stabile Verbindung der Teil der Polsterung zu einer einstückigen Polsterung bereitgestellt werden kann.

Gemäß einer Ausführungsform weisen die Teile der Polsterung erste Befestigungsmittel , insbesondere Befestigungsknöpfe im Sinne von sog. Schnappverbindungen, auf, welche ausgebildet sind, mit den zweiten Befestigungsmitteln, insbesondere Befestigungsöffnungen, lösbar verbunden zu werden.

Dadurch wird der technische Vorteil erreicht, dass durch mittels eines einfachen Eindrückens der insbesondere als Befestigungsknöpfe oder Schnappverschlüsse ausgebildeten ersten Befestigungsmittel der Teile der Polsterung in die insbesondere als Befestigungsöffnungen ausgebildeten zweiten Befestigungsmittel der Strukturverbindungsmittel eine wirksame Verbindung zwischen der Polsterung und dem jeweiligen Strukturverbindungsmittel möglich ist. Die entsprechende Verbindung kann durch ein Herausdrücken der ersten Befestigungsmittel, insbesondere Befestigungsknöpfe oder Schnappverschlüsse, aus den zweiten Befestigungsmitteln, insbesondere Befestigungsöffnungen, bei einer Demontage der einstückigen Polsterung wieder gelöst werden.

Gemäß einer Ausführungsform sind die ersten Befestigungsmittel, insbesondere Befestigungsknöpfe oder Schnappverschlüsse, an einer der Sitzschale zugewandten Rückseite der Teile der Polsterung angeordnet.

Dadurch wird der technische Vorteil erreicht, dass die an der Rückseite angeordneten ersten Befestigungsmittel die Ergonomie des an der Vorderseite in der Polsterung sitzenden Rennfahrers nicht beeinträchtigen.

Gemäß einer Ausführungsform weisen die Strukturverbindungsmittel, insbesondere das erste, zweite und dritte Strukturverbindungsmittel, eine Mehrzahl von Befestigungslaschen mit den zweiten Befestigungsmitteln auf, und weisen die Teile der Polsterung Befestigungsaufnahmen zur Aufnahme der Befestigungslaschen auf, wobei die ersten Befestigungsmittel in den Befestigungsaufnahmen angeordnet und ausgebildet sind, die in den Befestigungsaufnahmen lösbar aufgenommenen Befestigungslaschen mittels der zweiten Befestigungsmittel lösbar zu verbinden. Dies insbesondere in der Funktion wie herkömmliche Schnappverschlüsse.

Dadurch wird der technische Vorteil erreicht, dass durch das Einführen der Befestigungslaschen der Strukturverbindungsmittel in die Befestigungsaufnahmen der Teile der Polsterung ein einfaches Zusammenfügen der Teile der Polsterung möglich ist. Dies ist mittels herkömmlicher Schnappverbindungen möglich.

Gemäß einer Ausführungsform weisen die Strukturverbindungsmittel, insbesondere das erste, zweite und dritte Strukturverbindungsmittel, zumindest eine erste Befestigungslasche zum Verbinden mit einem Teil der Polsterung und zumindest eine zweite Befestigungslasche zum Verbinden mit einem anderen Teil der Polsterung auf.

Dadurch wird der technische Vorteil erreicht, dass die Strukturverbindungsmittel eine wirksame verbindende Überbrückung zwischen den beiden zu verbindenden Teilen der Polsterung bereitstellen.

Gemäß einer Ausführungsform weisen die Strukturverbindungsmittel, insbesondere das erste, zweite und dritte Strukturverbindungsmittel, eine H-Form auf.

Dadurch wird der technische Vorteil erreicht, dass eine vorteilhafte lösbare Verbindung bereitgestellt werden kann.

Gemäß einem zweiten Aspekt der vorliegenden Erfindung wird die Aufgabe gelöst durch zumindest eine mehrteilige Polsterung für einen Fahrersitz, die zumindest eine mehrteilige Polsterung umfassend, ein mehrteiliges Polstersitzteil und ein mehrteiliges Polsterrückenteil, wobei das mehrteilige Polstersitzteil ein erstes Polstersitzunterteil für das Gesäß des Fahrers und ein zweites Polstersitzunterteil für die Auflage der Oberschenkel des Fahrers umfasst, wobei das mehrteilige Polsterrückenteil zumindest ein erstes Polsterrückenunterteil für den Bereich der Lendenwirbel und/oder Taille des Fahrers und zumindest ein zweites Polsterrückenunterteil für den Oberkörper des Fahrers umfasst, und Strukturverbindungsmittel, welche ausgebildet sind, die Teile der Polsterung lösbar miteinander und/oder lösbar mit der Sitzschale zu verbinden, so dass die Polsterung in einem Stück an der Sitzschale befestigbar ist.

Dadurch wird der technische Vorteil erreicht, dass vorteilhaft an den jeweilige Fahrer, insbesondere Rennfahrer, individuell angepasste Polsterungen bereitgestellt werden, welche durch den Fahrer vor dem Fahrerwechsel bereits angelegt werden können, so dass sich der Fahrer beim Fahrerwechsel nur einfach in die Sitzschale setzen muss.

Gemäß weiterer vorteilhafter Ausführungsformen weist das zweite Polsterrückenteil Laschen zum Einhängen in die Sitzschale und zum Befestigen an der Sitzschale auf. Diese Einhängelaschen können in Schulterhöhe oder aber auch am Kopfteil angebracht werden.

Alle für den Fahrersitz gemäß dem ersten Aspekt genannten vorteilhaften Ausführungsformen sind auch vorteilhafte Ausführungsformen für die mehrteilige Polsterung gemäß dem zweiten Aspekt.

### Kurze Beschreibung der Figuren

Die Erfindung wird nun unter Bezugnahme auf die beigefügten Figuren erläutert, die exemplarische und nicht beschränkende Ausführungsformen der Erfindung zeigen, wobei
Figur 1 einen Fahrzeugsitz, insbesondere Sportwagensitz, mit einer Sitzschale, einer mehrteiligen Polsterung und Strukturverbindungsmitteln in einer seitlichen Explosionsdarstellung gemäß einer Ausführungsform zeigt,
Figur 2 den in der Figur 1 dargestellten Fahrzeugsitz, insbesondere Sportwagensitz, in einer rückseitigen Explosionsdarstellung zeigt, und
Figur 3 den in der Figur 1 und der Figur 2 dargestellten Fahrzeugsitz, insbesondere Sportwagensitz, in einem zusammengefügten Zustand der Sitzschale und der einstückigen, mehrteiligen Polsterung zeigt.

### Detaillierte Beschreibung der Figuren

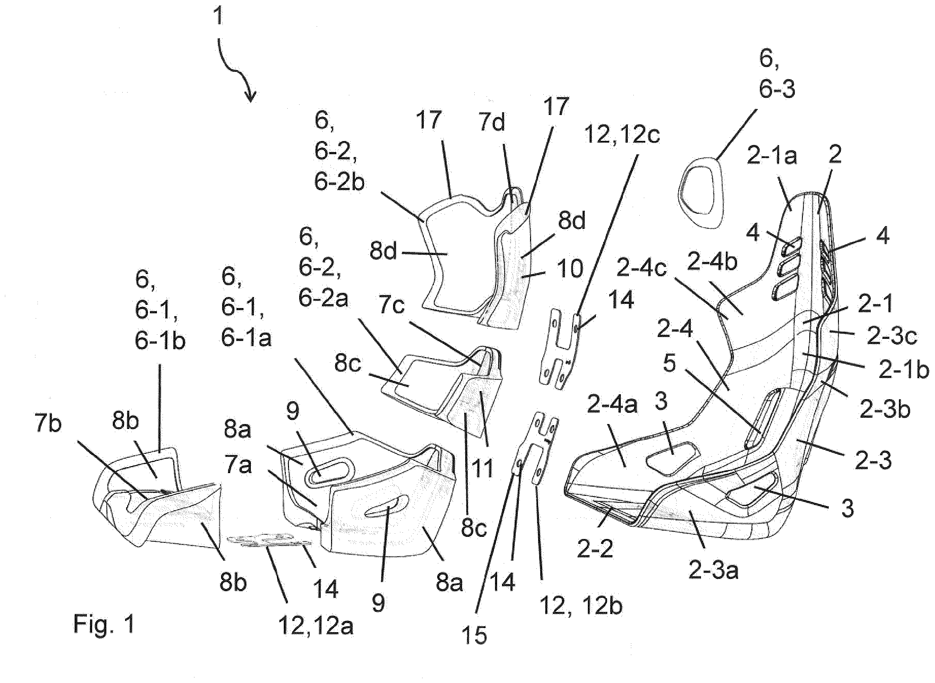

Figur 1 zeigt einen Fahrzeugsitz, insbesondere Sportwagensitz, mit einer Sitzschale, einer mehrteiligen Polsterung und Strukturverbindungsmitteln in einer seitlichen Explosionsdarstellung gemäß einer Ausführungsform.

Wie aus dem Stand der Technik bekannt ist, weisen Fahrzeugsitze eine harte Sitzschale auf, welche die notwendige Stabilität des Fahrzeugsitzes bereitstellt, wobei auf der harten Sitzschale eine aus einem weichen Material bestehende Polsterung aufgebracht ist, auf welcher der Fahrer sitzt, und welche eine bequeme Sitzposition der Fahrers während der Fahrt ermöglicht.

Im Motorsport, insbesondere bei langdauernden Fahrzeugrennen, wirken auf den in einem Sportwagen auf einem Sportwagensitz sitzenden Rennfahrer nicht nur immense Verzögerungswerte beim Bremsen, sondern treten bei Kurvenfahrten mit hohen Geschwindigkeiten sehr hohe Querbeschleunigungen auf, welche teilweise Werte von mehr als der vierfachen Erdbeschleunigung erreichen können.

Aus diesem Grund ist es im Motorsport, insbesondere bei langdauernden Fahrzeugrennen, entscheidend, dass die in dem Sportwagensitz verwendete Polsterung perfekt an die individuelle Körperanatomie des jeweiligen Rennfahrers angepasst ist, um eine optimale Sitzergonomie zu erreichen, da bereits kleineste Abweichungen der optimalen Sitzergonomie zu Druckstellen bei Rennfahrern führen können, welche unter Umständen zu Schmerzen und Muskelkrämpfen führen können, welche die Rennperformance des Rennfahrers signifikant beeinträchtigen können.

Aus diesem Grund gibt es im Motorsport, insbesondere bei langdauernden Fahrzeugrennen, für jeden einzelnen Rennfahrer eine individuell auf den jeweiligen Rennfahrer angepasste Sitzpolsterung, welche nicht zwischen unterschiedlichen Rennfahrern getauscht wird.

Ein Problem im Motorsport, insbesondere bei langdauernden Fahrzeugrennen, ist, dass oftmals Fahrerwechsel notwendig sind, welche natürlich aufgrund des Charakters des Rennens zeitlich möglich schnell durchgeführt werden müssen, und keine Zeit für einen aufwendigen Umbau des Sportwagensitzes dahingehend vorhanden ist, dass ein Tausch der Polsterung durchgeführt werden kann.

Aus diesem Grund weisen im Motorsport, insbesondere bei langdauernden Fahrzeugrennen, verwendete Sportwagensitze lediglich eine harte Sitzschale auf, welche von allen Rennfahrern verwendet werden kann, jedoch keine fest mit der Sitzschale verbundene Polsterung auf, da die Polsterung auf jeden einzelnen Rennfahrer individuell angepasst ist, und entsprechend bei einem Fahrerwechsel getauscht werden muss.

Das Ziel der vorliegenden Erfindung ist, einen Fahrzeugsitz, insbesondere Sportwagensitz, bereitzustellen, bzw. eine mehrteilige Polsterung bereitzustellen, bei welchem die Zeitdauer für einen Wechsel der Polsterung bei einem Fahrerwechsel im Motorsport, insbesondere bei langdauernden Fahrzeugrennen, signifikant reduziert und minimiert werden kann.

Dies wird gemäß dem in der Figur 1 dargestellten Fahrzeugsitz 1, insbesondere Sportwagensitz, erreicht, wie nachfolgend erläutert wird.

Der Fahrzeugsitz 1, insbesondere Sportwagensitz, umfasst eine Sitzschale 2, welche wiederum eine Rückenlehne 2-1 für den Rücken eines Fahrers, ein Schalensitzteil 2-2 für das Becken und die Oberschenkel des Fahrers, und Seitenwangen 2-3, 2-4 für Becken, Oberschenkel, Taille, Rücken und Schultern des Fahrers umfasst.

Der Fahrzeugsitz 1, insbesondere Sportwagensitz, umfasst ferner eine mehrteilige Polsterung 6, welche ein mehrteiliges Polstersitzteil 6-1 und ein mehrteiliges Polsterrückenteil 6-2 umfasst, welche nachfolgend im Detail weiter beschrieben werden.

Entscheidend ist hierbei, dass die Teile 6-1, 6-2 der Polsterung 6 mittels Strukturverbindungsmittel 12 lösbar miteinander und/oder lösbar mit der Sitzschale 2 verbunden sind, so dass die Polsterung 6 in einem Stück an der Sitzschale 2 befestigt ist.

Durch die Strukturverbindungsmittel 12 wird somit sichergestellt, dass das mehrteilige Polstersitzteil 6-1 und das mehrteilige Polsterrückenteil 6-2 miteinander verbunden werden, um die Polsterung 6 in einem Stück, d.h. eine einstückige Polsterung 6 für den Fahrer, bereitzustellen.

Diese einstückige Polsterung 6, welche individuell an die Körperproportionen des jeweiligen Rennfahrers angepasst ist, kann dem jeweiligen Rennfahrer vor dem Fahrerwechsel angelegt bzw. zusammengestellt bzw. zusammengesteckt werden, so dass sich der Rennfahrer beim Fahrerwechsel mit der für ihn angelegten und/oder zusammengestellten einstückigen Polsterung 6 einfach nur in die leere Sitzschale 2 des Fahrersitzes 1 bzw. Sportwagensitzes setzen muss, bevor weitergefahren werden kann.

Dadurch entfallen aufwendige Umbauten an dem Sportwagensitz und es entsteht vor allem ein entscheidender Zeitvorteil beim Fahrerwechsel, da der Rennfahrer, die entsprechende einstückige Polsterung 6 vor dem Fahrerwechsel schon anlegen bzw. zusammenstellen kann.

Die lösbaren Verbindungen der Teile 6-1, 6-2 der Polsterung 6 mittels Strukturverbindungsmittel 12 ermöglicht dem Rennfahrer, die einzelnen Teile der Polsterung 6 nach dem Fahrerwechsel wieder einfach abzunehmen, bzw. es können gegebenenfalls beschädigte und verschmutzte Teile 6-1, 6-2 der Polsterung 6 einfach getauscht werden, ohne dass die gesamte Polsterung 6 ersetzt wird. Somit wird ein wirksames modulares System einer mehrteiligen Polsterung 6 bereitgestellt, welches an unterschiedlichste Sitzschalen 2 und unterschiedliche Fahrer optimiert angepasst werden kann.

Die in der Figur 1 gezeigte Sitzschale 2 kann sowohl als eine einteilige Sitzschale 2 als auch als eine mehrteilige Sitzschale 2 ausgebildet sein.

Wie aus der Figur 1 ferner hervorgeht, sind die Seitenwangen 2-3, 2-4 an einander gegenüberliegenden Seiten der Sitzschale 2 angeordnet und begrenzen das Schalensitzteil 2-2 und die Rückenlehne 2-1 seitlich, wobei die Seitenwangen 2-3, 2-4 hierbei insbesondere symmetrisch zueinander geformt sind.

Die Seitenwangen 2-3, 2-4 weisen jeweils einen unteren Seitenwangenbereich 2-3a, 2-4a auf, welcher das Schalensitzteil 2-2 seitlich begrenzt. Die Seitenwangen 2-3, 2-4 weisen jeweils einen oberen Seitenwangenbereich 2-3b, 2-4b auf, welcher die Rückenlehne 2-1 seitlich begrenzt.

Somit ermöglichen die Seitenwangen 2-3, 2-4 eine Fixierung des in der einstückigen Polsterung 6 sitzenden Fahrers, dadurch dass diese die Polsterung 6 seitlich abstützen. Beispielsweise stabilisiert der untere Seitenwangenbereich 2-3a, 2-4a der Seitenwangen 2-3, 2-4 das mehrteilige Polstersitzteil 6-1 und damit die Oberschenkel und Hüfte des Fahrers. Beispielsweise stabilisiert der obere Seitenwangenbereich 2-3b, 2-4b das mehrteilige Polsterrückenteil 6-2 und damit den Rücken des Fahrers.

Wie aus der Figur 1 ferner zu entnehmen ist, weisen die Seitenwangen 2-3, 2-4, insbesondere der obere Seitenwangenbereich 2-3b, 2-4b jeweils einen Vorsprung 2-3c, bzw. 2-4c auf, in welchen die Einhängelaschen 17 der Polsterung 6 eingreifen können. Dadurch wird die Polsterung 6 zusätzlich in der Sitzschale 2 befestigt und fixiert.

Zudem weist die Rückenlehne 2-1 der Sitzschale 2 einen Kopfstützbereich 2-1a zum Stützen des Kopfes des Fahrers und einen Rückenstützbereich 2-1b zum Stützen des Rückens des Fahrers auf.

Da der Fahrer während des Motorrennens durch Sicherheitsgurte gesichert wird, weist die Sitzschale 2 mehrere Gurtöffnungen 3, 4 zum Durchführen der Gurte auf.

Hierbei ist insbesondere in den Seitenwangen 2-3, 2-4, insbesondere in dem unteren Seitenwangenbereich 2-3a, 2-4a, jeweils zumindest eine untere Gurtöffnung 3, insbesondere zwei gegenüberliegende untere Gurtöffnungen 3, zum Durchführen eines Beckengurtes des Fahrers geformt.

Hierbei ist in der Rückenlehne 2-1, insbesondere zwischen dem Kopfstützbereich 2-1a und dem Rückenstützbereich 2-1b, zumindest eine obere Gurtöffnung 4 zum Durchführen eines Schultergurtes des Fahrers, insbesondere zwei nebeneinander angeordnete obere Gurtöffnungen zum Durchführen von zwei Schultergurten, geformt. Insbesondere sind hier mehrere in der Höhe versetzte Gurtöffnungen 4 geformt, um hierbei unterschiedliche Größen der verschiedenen Fahrer zu berücksichtigen.

Hierbei ist in der Rückenlehne 2-1, insbesondere in dem Rückenstützbereich 2-1b, zumindest eine mittlere Öffnung 5 geformt, die der besseren Belüftung dient, insbes, zur Luftzufuhr und Luftabfuhr zur besseren Kühlung des Fahrers während der Fahrt.

Nachfolgend wird die mehrteilige Polsterung 6, welche ein mehrteiliges Polstersitzteil 6-1 und ein mehrteiliges Polsterrückenteil 6-2 umfasst, im Detail beschrieben.

Das mehrteilige Polstersitzteil 6-1 umfasst ein erstes Polstersitzunterteil 6-1a für das Gesäß des Fahrers und ein zweites Polstersitzunterteil 6-1b für die Auflage der Oberschenkel des Fahrers.

Das mehrteilige Polsterrückenteil 6-2 umfasst zumindest ein erstes Polsterrückenunterteil 6-2a für den Bereich der Lendenwirbel und/oder der Taille des Fahrers und zumindest ein zweites Polsterrückenunterteil 6-2b für den Oberkörper des Fahrers.

Das erste Polstersitzunterteil 6-1a weist einen ersten Polstersitzbereich 7a für das Becken des Fahrers auf. Das zweite Polstersitzunterteil 6-1b weist einen zweiten Polstersitzbereich 7b für die Oberschenkel des Fahrers auf. Das erste Polsterrückenunterteil 6-2a weist einen ersten Polsterrückenbereich 7c für den Bereich der Lendenwirbel und/oder Taille des Fahrers auf. Das zweite Polsterrückenunterteil 6-2b weist einen zweiten Polsterrückenbereich 7d für den Oberkörper des Fahrers auf.

Das erste Polstersitzunterteil 6-1a weist jeweils erste untere Polsterseitenwangen 8a auf. Das zweite Polstersitzunterteil 6-1b weist jeweils zweite untere Polsterseitenwangen 8b auf. Das erste Polsterrückenunterteil 6-2a weist jeweils erste obere Polsterseitenwangen 8c auf. Das zweite Polsterrückenunterteil 6-2b weist jeweils zweite obere Polsterseitenwangen 8d auf.

Eine Kopfpolsterung 6-3 für den Kopf des Fahrers ist ebenfalls gezeigt. Diese kann sowohl an dem zweite Polsterrückenunterteil 6-2b angebracht sein oder aber auch direkt an der Sattelschale 2 befestigt sein.

Somit ermöglichen die Polsterseitenwangen 8a, 8b, 8c und 8d einen wirksamen Anlagepunkt für die Körperteile des Fahrers und eine wirksame Fixierung des Fahrers innerhalb der Polsterung 6.

In dem ersten Polstersitzunterteil 6-1a, insbesondere in den ersten unteren Polsterseitenwangen 8a, ist jeweils zumindest eine untere, weitere Gurtöffnung 9 zum Durchführen eines Beckengurtes des Fahrers geformt.

In dem zweiten Polsterrückenunterteil 6-2b, insbesondere zwischen dem Kopfstützbereich 2-1a und dem zweiten Polsterrückenbereich 7d, ist zumindest eine obere, weitere Gurtöffnung oder Gurtausbuchtung bzw. Gurtnut 10 zum Durchführen bzw. Vorbeiführen eines Schultergurtes bzw. der beiden Schultergurte des Fahrers geformt.

In dem ersten Polsterrückenunterteil 6-2a, insbesondere in dem ersten Polsterrückenbereich 7c, ist zumindest eine mittlere, weitere Öffnung 11 geformt, die der besseren Belüftung dient und mit der Öffnung 5 in der Sattelschale 2 korrespondiert.

Um die Teile 6-1, 6-2 der Polsterung miteinander zu verbinden, sind die Strukturverbindungsmittel 12 vorhanden.

Die Strukturverbindungsmittel 12 umfassen ein erstes Strukturverbindungsmittel 12a, welches ausgebildet ist, das erste Polstersitzunterteil 6-1a mit dem zweiten Polstersitzunterteil 6-1b lösbar zu verbinden.

Die Strukturverbindungsmittel 12 umfassen ein zweites Strukturverbindungsmittel 12b, welches ausgebildet ist, das zweite Polstersitzunterteil 6-1b mit dem ersten Polsterrückenunterteil 6-2a lösbar zu verbinden.

Die Strukturverbindungsmittel 12 umfassen ein drittes Strukturverbindungsmittel 12c, welches ausgebildet ist, das erste Polsterrückenunterteil 6-2a mit dem zweiten Polsterrückenunterteil 6-2b lösbar zu verbinden.

Die Teile 6-1, 6-2 der Polsterung 6 weisen in Figur 1 nicht dargestellte erste Befestigungsmittel 13, insbesondere Befestigungsknöpfe oder Schnappverbindungen bzw. -verschlüsse, auf, welche ausgebildet sind, mit den zweiten Befestigungsmitteln 14, insbesondere Befestigungsöffnungen, der Strukturverbindungsmittel 12 lösbar verbunden zu werden.

Für weitere Details in Bezug auf die Strukturverbindungsmittel 12, insbesondere die Befestigungslaschen 15 und die Befestigung an den Teilen 6-1, 6-2 der Polsterung 6 wird auf die nachfolgenden Figuren verwiesen.

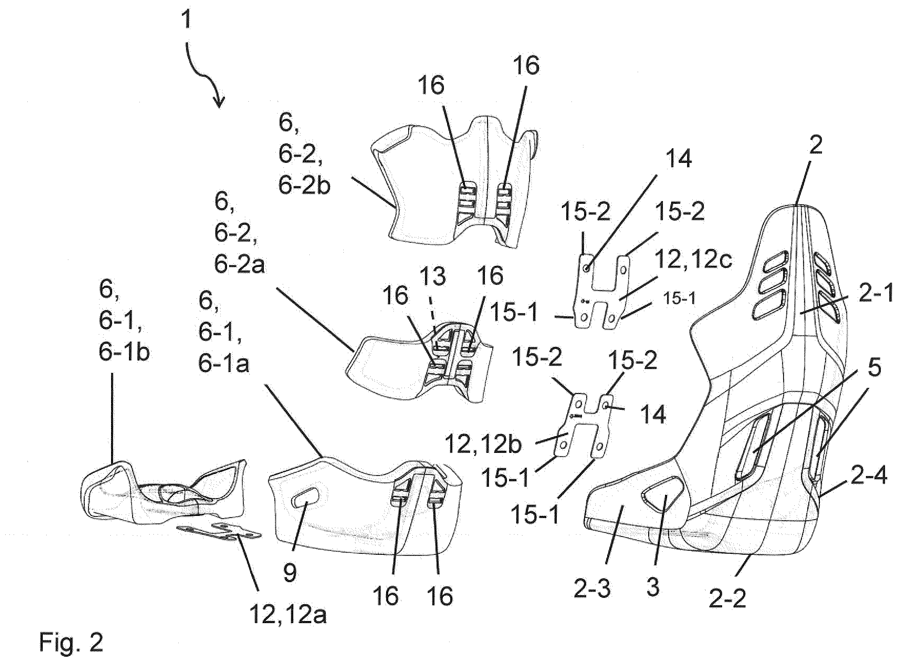

Figur 2 zeigt den in der Figur 1 dargestellten Fahrzeugsitz, insbesondere Sportwagensitz, in einer rückseitigen Explosionsdarstellung.

Um Wiederholungen zu vermeiden und um die Übersichtlichkeit der Figur 2 zu gewährleisten, sind in der Figur 2 lediglich die wesentlichen Teile des Fahrzeugsitzes 1, insbesondere des Sportwagensitzes, mit Bezugszeichen markiert, und für weitere Details wird hierbei auf die Bezugszeichen in der Figur 1 verwiesen.

Wie bereits in Bezug auf die Figur 1 ausgeführt wurde, verbindet das erste Strukturverbindungsmittel 12a das erste Polstersitzunterteil 6-1a mit dem zweiten Polstersitzunterteil 6-1b lösbar, verbindet das zweite Strukturverbindungsmittel 12b das erste Polstersitzunterteil 6-1a mit dem ersten Polsterrückenunterteil 6-2a lösbar, und verbindet das dritte Strukturverbindungsmittel 12c das erste Polsterrückenunterteil 6-2a mit dem zweiten Polsterrückenunterteil 6-2b lösbar.

Die Strukturverbindungsmittel 12, insbesondere das erste, zweite und dritte Strukturverbindungsmittel 12a, 12b, 12c, weisen insbesondere eine H-Form auf.

Die Strukturverbindungsmittel 12a, 12b, 12c weisen eine Mehrzahl von Befestigungslaschen 15 mit den zweiten Befestigungsmitteln 14, insbesondere Befestigungsöffnungen, auf, und die Teile 6-1, 6-2 der Polsterung 6 weisen Befestigungsaufnahmen 16 zur Aufnahme der Befestigungslaschen 15 auf.

Die Strukturverbindungsmittel 12a, 12b, 12c weisen zumindest eine erste Befestigungslasche 15-1 zum Verbinden mit einem Teil 6-1, 6-2 der Polsterung 6 und zumindest eine zweite Befestigungslasche 15-2 zum Verbinden mit einem anderen Teil 6-1, 6-2 der Polsterung 6 auf.

Übertragen auf das dritte Strukturverbindungsmittel 12c bedeutet dies beispielsweise, dass die beiden ersten Befestigungslaschen 15-1 des dritten Strukturverbindungsmittels 12c in die jeweilige Befestigungsaufnahme 16 an der der Sitzschale 2 zugewandten Rückseite des ersten Polsterrückenunterteils 6-2a eingeführt werden, und dass die beiden zweiten Befestigungslaschen 15-2 des dritten Strukturverbindungsmittels 12c in die jeweilige Befestigungsaufnahme 16 an der der Sitzschale 2 zugewandten Rückseite des zweiten Polsterrückenunterteils 6-2b eingeführt werden. Mittels herkömmlicher Schnappverbindungen lässt sich dies auf einfache Weise verwirklichen, wobei das Schnappelement, hier die Befestigungsaufnahme 16, das Einfedern des Fügeelements, hier die Befestigungslaschen 15-1, 15-2, ermöglicht.

In den Befestigungsaufnahmen 16 sind in der Figur 2 nicht dargestellte erste Befestigungsmittel 13, insbesondere Befestigungsknöpfe oder Schnappverbindungen bzw. -verschlüsse, angeordnet, welche ausgebildet sind, in die entsprechenden in den Befestigungslaschen 15 ausgebildeten zweiten Befestigungsmittel 14, insbesondere in die Befestigungsöffnungen, einzugreifen, um eine lösbare Verbindung zwischen dem zweiten Polsterrückenunterteil 6-2b und dem drittem Strukturverbindungsmittel 12c und um eine lösbare Verbindung zwischen dem drittem Strukturverbindungsmittel 12c und dem ersten Polsterrückenunterteil 6-2a bereitzustellen.

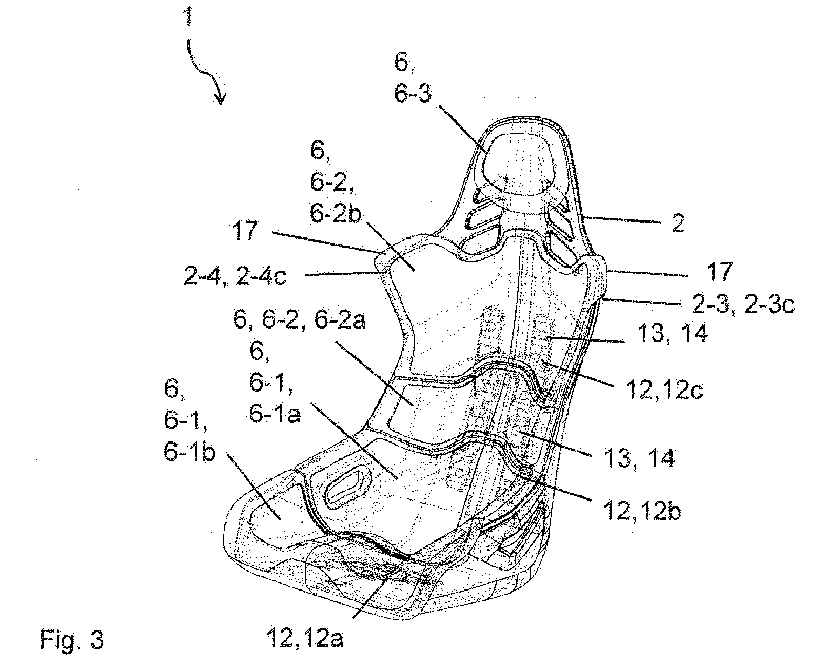

Figur 3 zeigt den in der Figur 1 und der Figur 2 dargestellten Fahrzeugsitz, insbesondere Sportwagensitz, in einem zusammengefügten Zustand der Sitzschale und der einstückigen, mehrteiligen Polsterung.

In der Figur 3 ist aufgrund der halbtransparenten Darstellung die mittels der Strukturverbindungsmittel 12 verbundenen einstückige Polsterung 6 gezeigt, welche das erste Polstersitzunterteil 6-1a, das zweite Polstersitzunterteil 6-1b, das erste Polsterrückenunterteil 6-2a und das zweite Polsterrückenunterteil 6-2b, sowie die Kopfpolsterung 6-3 umfasst.

Aufgrund der halbtransparenten Darstellung der Figur 3 sind hier in den Strukturverbindungsmitteln 12 die als zweite Befestigungsmittel 14 ausgebildeten Befestigungsöffnungen, im Sinne einer Schnappverbindung, mit den darin eingeführten als erste Befestigungsmittel 13 ausgebildeten Befestigungsknöpfe durchscheinend dargestellt, wobei hierbei für den genauen Mechanismus der Befestigung auf die Ausführungen zur Figur 2 verwiesen wird.

Aus der Figur 3 ist noch zu entnehmen, dass die einstückige Polsterung 6, insbesondere das zweite Polsterrückenunterteil 6-2b, zwei Einhängelaschen 17 aufweist, welche ausgebildet sind, in die Sitzschale 2 einzugreifen, um die Polsterung 6 wirksam an der Sitzschale 2 zu befestigen. Hierbei greifen die beiden Einhängelaschen 17 in die Seitenwangen 2-3, 2-4, insbesondere in den oberen Seitenwangenbereich 2-3b, 2-4b, insbesondere in den jeweiligen Vorsprung 2-3c, bzw. 2-4c ein. Es ist aber auch möglich eine Einhängelasche an der Kopfpolsterung 6-3 anzubringen und die Kopfpolsterung 6-3 mit zweite Polsterrückenunterteil 6-2b zu verbinden. Auf diese Weise erfolgt das Einhängen und Befestigen der Polsterung 6 in der Sitzschale 2 über die an der Kopfpolsterung 6-3 angebrachten Einhängelasche. Die Einhängelaschen 17 können aber auch an einer anderen Stelle des zweiten Polsterrückenunterteils 6-2b als in Figur 3 gezeigt angebracht werden, so dass z.B. ein Eingreifen in die Gurtöffnungen 4 erfolgt.

Die einstückige Polsterung 6 kann perfekt in die Sitzschale 2 eingepasst werden und ermöglicht eine stabile Aufnahme des darin sitzenden Fahrers in dem Fahrersitz, insbesondere Sportwagensitz.

### BEZUGSZEICHEN

- 1: Fahrzeugsitz
- 2: Sitzschale
- 2-1: Rückenlehne
- 2-1a: Kopfstützbereich
- 2-1b: Rückenstützbereich
- 2-2: Schalensitzteil
- 2-3: Seitenwange
- 2-3a: Unterer Seitenwangenbereich
- 2-3b: Oberer Seitenwangenbereich
- 2-3c: Vorsprung
- 2-4: Seitenwange
- 2-4a: Unterer Seitenwangenbereich
- 2-4b: Oberer Seitenwangenbereich
- 2-4c: Vorsprung
- 3: Untere Gurtöffnung
- 4: Obere Gurtöffnung
- 5: Belüftungsöffnung
- 6: Polsterung
- 6-1: Polstersitzteil
- 6-1a: Erstes Polstersitzunterteil
- 6-1b: Zweites Polstersitzunterteil
- 6-2: Polsterrückenteil
- 6-2a: Erstes Polsterrückenunterteil
- 6-2b: Zweites Polsterrückenunterteil
- 6-3: Kopfpolsterung
- 7a: Erster Polstersitzbereich
- 7b: Zweiter Polstersitzbereich
- 7c: Dritter Polstersitzbereich
- 7d: Vierter Polstersitzbereich
- 8a: Erste untere Polsterseitenwange
- 8b: Zweite untere Polsterseitenwange
- 8c: Erste obere Polsterseitenwange
- 8d: Zweite obere Polsterseitenwange
- 9: Untere, weitere Gurtöffnung
- 10: Obere, weitere Gurtöffnung
- 11: Belüftungsöffnung
- 12: Strukturverbindungsmittel
- 12a: Erstes Strukturverbindungsmittel
- 12b: Zweites Strukturverbindungsmittel
- 12c: Drittes Strukturverbindungsmittel
- 13: Erste Befestigungsmittel, z.B. Haken oder Knopf
- 14: Zweite Befestigungsmittel, z.B. Haken oder Knopf
- 15: Befestigungslasche, Fügeelement, federnde Lasche
- 15-1: Erste Befestigungslasche, Fügeelement, federnde Lasche
- 15-2: Zweite Befestigungslasche, Fügeelement, federnde Lasche
- 16: Befestigungsaufnahme, Schnappelement
- 17: Einhängelasche

## Patentansprüche

1. Fahrzeugsitz (1), insbesondere Sportwagensitz, umfassend
eine Sitzschale (2), umfassend eine Rückenlehne (2-1) für den Rücken eines Fahrers, ein Schalensitzteil (2-2) für das Becken und die Oberschenkel des Fahrers, und Seitenwangen (2-3, 2-4) für Becken, Oberschenkel, Taille, Rücken und Schultern des Fahrers, und
zumindest eine mehrteilige Polsterung (6),
wobei die mehrteilige Polsterung (6) ein mehrteiliges Polstersitzteil (6-1) und ein mehrteiliges Polsterrückenteil (6-2) umfasst,
wobei das mehrteilige Polstersitzteil (6-1) ein erstes Polstersitzunterteil (6-1a) für das Gesäß des Fahrers und ein zweites Polstersitzunterteil (6-1b) für die Auflage der Oberschenkel des Fahrers umfasst,
wobei das mehrteilige Polsterrückenteil (6-2) zumindest ein erstes Polsterrückenunterteil (6-2a) für den Bereich der Lendenwirbel und/oder Taille des Fahrers und zumindest ein zweites Polsterrückenunterteil (6-2b) für den Oberkörper des Fahrers umfasst, und
wobei die Teile (6-1, 6-2) der Polsterung (6) mittels Strukturverbindungsmittel (12) lösbar miteinander und/oder lösbar mit der Sitzschale (2) verbunden sind, so dass die Polsterung (6) in einem Stück an der Sitzschale (2) befestigt ist.

2. Fahrzeugsitz (1) nach Anspruch 1, **dadurch gekennzeichnet, dass** die Sitzschale (2) als eine einteilige Sitzschale (2) oder als eine mehrteilige Sitzschale (2) ausgebildet ist.

3. Fahrzeugsitz (1) nach Anspruch 1 oder 2, **dadurch gekennzeichnet, dass** die mehrteilige Polsterung (6) nur ein einstückiges Polstersitzteil (6-1) und/oder ein einstückiges Polsterrückenteil (6-2) umfasst.

4. Fahrzeugsitz (1) nach einem der vorangehenden Ansprüche, **dadurch gekennzeichnet, dass** die Seitenwangen (2-3, 2-4) an einander gegenüberliegenden Seiten der Sitzschale (2) angeordnet sind und das Schalensitzteil (2-2) und die Rückenlehne (2-1) seitlich begrenzen, wobei die Seitenwangen (2-3, 2-4) insbesondere symmetrisch zueinander geformt sind.

5. Fahrzeugsitz (1) nach einem der vorangehenden Ansprüche, **dadurch gekennzeichnet, dass** die Seitenwangen (2-3, 2-4) jeweils einen unteren Seitenwangenbereich (2-3a, 2-4a) aufweisen, welcher das Schalensitzteil (2-2) seitlich begrenzt, und dass die Seitenwangen (2-3, 2-4) jeweils einen oberen Seitenwangenbereich (2-3b, 2-4b) aufweisen, welcher die Rückenlehne (2-1) seitlich begrenzt.

6. Fahrzeugsitz (1) nach einem der vorangehenden Ansprüche, **dadurch gekennzeichnet, dass** die Rückenlehne (2-1) einen Kopfstützbereich (2-1a) zum Stützen des Kopfes des Fahrers und einen Rückenstützbereich (2-1b) zum Stützen des Rückens des Fahrers umfasst.

7. Fahrzeugsitz (1) nach einem der vorangehenden Ansprüche, **dadurch gekennzeichnet, dass** in den Seitenwangen (2-3, 2-4), insbesondere in dem unteren Seitenwangenbereich (2-3a, 2-4a), jeweils zumindest eine untere Gurtöffnung (3) zum Durchführen eines Beckengurtes des Fahrers geformt ist, und/oder
dass in der Rückenlehne (2-1), insbesondere zwischen dem Kopfstützbereich (2-1a) und dem Rückenstützbereich (2-1b), zumindest eine obere Gurtöffnung (4) zum Durchführen eines Schultergurtes des Fahrers geformt ist, und/oder
dass in der Rückenlehne (2-1), insbesondere in dem Rückenstützbereich (2-1b), zumindest eine mittlere Öffnung (5) geformt ist.

8. Fahrzeugsitz (1) nach einem der vorangehenden Ansprüche, **dadurch gekennzeichnet, dass** das erste Polstersitzunterteil (6-1a) einen ersten Polstersitzbereich (7a) für das Becken des Fahrers aufweist, dass das zweite Polstersitzunterteil (6-1b) einen zweiten Polstersitzbereich (7b) für die Oberschenkel des Fahrers aufweist, dass das erste Polsterrückenunterteil (6-2a) einen ersten Polsterrückenbereich (7c) für den Bereich der Lendenwirbel und/oder Taille des Fahrers aufweist, und/oder dass das zweite Polsterrückenunterteil (6-2b) einen zweiten Polsterrückenbereich (7d) für den Oberkörper des Fahrers aufweist.

9. Fahrzeugsitz (1) nach einem der vorangehenden Ansprüche, **dadurch gekennzeichnet, dass** das erste Polstersitzunterteil (6-1a) jeweils erste untere Polsterseitenwangen (8a) aufweist, dass das zweite Polstersitzunterteil (6-1b) jeweils zweite untere Polsterseitenwangen (8b) aufweist, dass das erste Polsterrückenunterteil (6-2a) jeweils erste obere Polsterseitenwangen (8c) aufweist, und/oder dass das zweite Polsterrückenunterteil (6-2b) jeweils zweite obere Polsterseitenwangen (8d) aufweist,

10. Fahrzeugsitz (1) nach einem der vorangehenden Ansprüche, **dadurch gekennzeichnet, dass** in dem ersten Polstersitzunterteil (6-1a), insbesondere in den ersten unteren Polsterseitenwangen (8a), jeweils zumindest eine untere, weitere Gurtöffnung (9) zum Durchführen eines Beckengurtes des Fahrers geformt ist, und/oder
dass in dem zweiten Polsterrückenunterteil (6-2b), insbesondere zwischen dem Kopfstützbereich (2-1a) und dem zweiten Polsterrückenbereich (7d), zumindest eine obere, weitere Gurtöffnung (10) zum Durchführen eines Schultergurtes des Fahrers geformt ist, und/oder
dass in dem ersten Polsterrückenunterteil (6-2a), insbesondere in dem ersten Polsterrückenbereich (7c), zumindest eine mittlere, weitere Öffnung (11) geformt ist.

11. Fahrzeugsitz (1) nach einem der vorangehenden Ansprüche, **dadurch gekennzeichnet, dass** die Strukturverbindungsmittel (12) ein erstes Strukturverbindungsmittel (12a) umfassen, welches ausgebildet ist, das erste Polstersitzunterteil (6-1a) mit dem zweiten Polstersitzunterteil (6-1b) lösbar zu verbinden, dass
die Strukturverbindungsmittel (12) ein zweites Strukturverbindungsmittel (12b) umfassen, welches ausgebildet ist, das erste Polstersitzunterteil (6-1a) mit dem ersten Polsterrückenunterteil (6-2a) lösbar zu verbinden, und dass
die Strukturverbindungsmittel (12) ein drittes Strukturverbindungsmittel (12c) umfassen, welches ausgebildet ist, das erstes Polsterrückenunterteil (6-2a) mit dem zweiten Polsterrückenunterteil (6-2b) lösbar zu verbinden.

12. Fahrzeugsitz (1) nach einem der vorangehenden Ansprüche, **dadurch gekennzeichnet, dass** die Teile (6-1, 6-2) der Polsterung (6) erste Befestigungsmittel (13), insbesondere Befestigungsknöpfe, aufweisen, welche ausgebildet sind, mit den zweiten Befestigungsmitteln (14), insbesondere Befestigungsöffnungen, lösbar verbunden zu werden.

13. Fahrzeugsitz (1) nach Anspruch 11, **dadurch gekennzeichnet, dass** die ersten Befestigungsmittel (13), insbesondere Befestigungsknöpfe, an einer der Sitzschale (2) zugewandten Rückseite der Teile (6-1, 6-2) der Polsterung (6) angeordnet sind.

14. Fahrzeugsitz (1) nach Anspruch 11 oder 12, **dadurch gekennzeichnet, dass** die Strukturverbindungsmittel (12), insbesondere das erste, zweite und dritte Strukturverbindungsmittel (12a, 12b, 12c), eine Mehrzahl von Befestigungslaschen (15) mit den zweiten Befestigungsmitteln (14) aufweisen, und dass die Teile (6-1, 6-2) der Polsterung (6) Befestigungsaufnahmen (16) zur Aufnahme der Befestigungslaschen (15) aufweisen, wobei die ersten Befestigungsmittel (13) in den Befestigungsaufnahmen (16) angeordnet und ausgebildet sind, die in den Befestigungsaufnahmen (16) lösbar aufgenommenen Befestigungslaschen (15) mittels der zweiten Befestigungsmittel (14) lösbar zu verbinden.

15. Fahrzeugsitz (1) nach Anspruch 13, **dadurch gekennzeichnet, dass** die Strukturverbindungsmittel (12), insbesondere das erste, zweite und dritte Strukturverbindungsmittel (12a, 12b, 12c), zumindest eine erste Befestigungslasche (15-1) zum Verbinden mit einem Teil (6-1, 6-2) der Polsterung (6) und zumindest eine zweite Befestigungslasche (15-2) zum Verbinden mit einem anderen Teil (6-1, 6-2) der Polsterung (6) aufweist,

16. Fahrzeugsitz (1) nach einem der vorangehenden Ansprüche, **dadurch gekennzeichnet, dass** die Strukturverbindungsmittel (12), insbesondere das erste, zweite und dritte Strukturverbindungsmittel (12a, 12b, 12c), eine H-Form aufweisen.

17. Fahrzeugsitz (1) nach einem der vorangehenden Ansprüche, **dadurch gekennzeichnet, dass** das zweite Polsterrückenunterteil (6-2b) eine oder mehrere Einhängelaschen (17) aufweist, womit die Polsterung (6), insbesondere das zweite Polsterrückenunterteil (6-2b) in die Sitzschale (2) eingehängt und/oder befestigt werden kann.

18. Fahrzeugsitz (1) nach einem der vorangehenden Ansprüche, **dadurch gekennzeichnet, dass** die Kopfpolsterung (6-3) an dem zweiten Polsterrückenunterteil (6-2b) befestigt ist und die Kopfpolsterung (6-2) eine Einhängelasche (17) aufweist, womit die Polsterung (6), insbesondere das zweite Polsterrückenunterteil (6-2b) in die Sitzschale (2) eingehängt und/oder befestigt werden kann.

19. Zumindest eine mehrteilige Polsterung (6) für einen Fahrzeugsitz (1), insbesondere Sportwagensitz, die mehrteilige Polsterung (6) umfassend,
ein mehrteiliges Polstersitzteil (6-1) und
ein mehrteiliges Polsterrückenteil (6-2),
wobei das mehrteilige Polstersitzteil (6-1) ein erstes Polstersitzunterteil (6-1a) für das Gesäß des Fahrers und ein zweites Polstersitzunterteil (6-1b) für die Auflage der Oberschenkel des Fahrers umfasst,
wobei das mehrteilige Polsterrückenteil (6-2) zumindest ein erstes Polsterrückenunterteil (6-2a) für den Bereich der Lendenwirbel und/oder Taille des Fahrers und zumindest ein zweites Polsterrückenunterteil (6-2b) für den Oberkörper des Fahrers umfasst, und
Strukturverbindungsmittel (12), welche ausgebildet sind, die Teile (6-1, 6-2) der Polsterung (6) lösbar miteinander und/oder lösbar mit der Sitzschale (2) zu verbinden, so dass die Polsterung (6) in einem Stück an der Sitzschale (2) befestigbar ist.
